# EUROPÄISCHE PATENTSCHRIFT

(11) **EP 1 188 050 B1**
(45) Veröffentlichungstag und Bekanntmachung des Hinweises auf die Patenterteilung: **28.12.2005**
(21) Anmeldenummer: 00951242.7
(22) Anmeldetag: 26.06.2000
(51) Int. Cl.: G01N 27/90

(54) **VERFAHREN UND MESSGERÄT ZUR ERKENNUNG DER SCHWEISSNAHT VON LÄNGSNAHTGESCHWEISSTEN ROHREN**
METHOD AND MEASURING DEVICE FOR IDENTIFYING THE WELD SEAM OF LONGITUDINALLY SEAM-WELDED TUBES
PROCEDE ET APPAREIL DE MESURE POUR IDENTIFIER LE CORDON DE SOUDURE DE TUBES A SOUDURES LONGITUDINALES

(30) Priorität: 28.06.1999 DE 19930539
(43) Veröffentlichungstag der Anmeldung: 20.03.2002
(73) Patentinhaber: Mannesmannröhren-Werke GmbH, 45473 Mülheim a.d. Ruhr (DE)
(72) Erfinder: GROOS, Andreas, Dipl.-Phys., D-47509 Rheurdt (DE); CLAUS, Ronald, Dr.-Ing., D-59494 Soest (DE); HUTH, Thoralf, Dipl.-Ing., D-30655 Hannover (DE)
(74) Vertreter: Meissner, Peter E.
(86) Internationale Anmeldenummer: PCT/DE2000/002040
(87) Internationale Veröffentlichungsnummer: WO 2001/001123

(56) Entgegenhaltungen:
- CH-A- 502 156
- DE-A- 2 138 734
- GB-A- 950 696
- US-A- 4 191 922

## Beschreibung

Die Erfindung betrifft ein Verfahren zur Erkennung der Schweißnaht von einzelnen, aus einem ferritischen oder austenitischen Werkstoff hergestellten, längsnahtgeschweißten Rohren gemäß dem Oberbegriff des Patentanspruches 1.

Für die Automobilindustrie werden ausgehend von einem Rohr eine Vielzahl unterschiedlicher Teile hergestellt, z. B. Querlenker. Aus Kostengründen und aus Gründen der Gleichmäßigkeit der Wanddicke werden zunehmend längsnahtgeschweißte Rohre als Ausgangsprodukt verwendet. Bei den nachfolgenden Umformprozessen kann die Lage der Schweißnaht von Bedeutung sein, so z. B. beim Biegen, wo man versucht, den Schweißnahtbereich möglichst in die sogenannte neutrale Zone zu legen, um Anrisse zu vermeiden. Diese Anrisse können bei der späteren Belastung oder bei einer weiteren Umformung, z. B. Innenhochdruckformen, zum Versagen des Bauteiles führen.

Zur Abhilfe dieses Problems hat man bereits ein Verfahren zur Erkennung der Schweißnaht von einzelnen längsnahtgeschweißten Rohren entwickelt (siehe Firmenprospekt Roland Elektronik GmbH, Rev. 1.0, Mai 1998 "Schweißnaht Detektor SND 8"). Für die Schweißnahterkennung bei Flachprodukten und Rohren wird das magnet-induktive Streuflußverfahren eingesetzt. Hierbei wird in das zu prüfende Werkstück ein konstanter magnetischer Fluß eingeleitet. Zur Auswertung werden nur dynamische Veränderungen des Magnetfeldes herangezogen.
Das zu untersuchende Rohr wird auf einen antreibbaren Rollgang gelegt (siehe o. g. Prospekt, Bild Seite 9). Mit diesem Verfahren können nach Angaben des Herstellers geschweißte Rohre ab 10 mm Durchmesser mit Wanddicken bis zu 3 mm untersucht werden.
Nachteilig bei diesem Verfahren ist, daß die Schweißnahterkennung bei Rohren mit Wanddicken gleich oder größer als 3,5 mm und insbesondere bei solchen Rohren, die nach dem Schweißen einer Schlußglühung unterzogen werden, schwierig, meistens sogar unmöglich ist.

Aufgabe der Erfindung ist es, ein Verfahren zur Erkennung der Schweißnaht von aus einem ferritischen oder austenitischen Werkstoff hergestellten längsnahtgeschweißten Rohren anzugeben, das meßtechnisch sicher auch für schlußgeglühte Rohre mit Wanddicken gleich oder größer als 3,5 mm anwendbar ist.

Diese Aufgabe wird ausgehend vom Oberbegriff in Verbindung mit den kennzeichnenden Merkmalen des Anspruches 1 gelöst. Vorteilhafte Weiterbildungen sowie ein Meßgerät zur Durchführung des Verfahrens sind jeweils Gegenstand von Unteransprüchen.

Lösungsgemäß wird in das Rohr Wirbelstrom geeigneter Frequenz mit einer Sonde eingeschallt und das Empfangssignal in eine entweder ein niedriges Signal (Grundwerkstoff) oder ein hohes Signal (Schweißnaht) ergebende Anzeige umgewandelt. Die Frequenz liegt im Bereich zwischen 100 kHz bis 1 MHz, vorzugsweise bei etwa 300 kHz. Die Stärke des Magnetfeldes wird so gewählt, daß im Grundwerkstoff ein möglichst gleichmäßiger Permeabilitätszustand erreicht wird. Permeabilitätsunterschiede erzeugen ebenfalls Signale, die aber nur als Untergrundrauschen bemerkbar sein sollten, damit das eigentliche gesuchte Signal der Schweißnaht sich klar davon abhebt. Als Maß für die Stärke des Magnetfeldes sollte deshalb eine Tangentialfeldstärke am Rohr von wenigstens 500 Oerstedt erreicht werden. Vorzugsweise sollte die Tangentialfeldstärke 800 Oerstedt betragen.

Der Vorteil des vorgeschlagenen Meßverfahrens ist darin zu sehen, daß durch den Skineffekt des mit hoher Frequenz arbeitenden Wirbelstromes das Meßverfahren nahezu unabhängig von der Wanddicke des zu prüfenden Rohres ist. Ein weiterer Vorteil ergibt sich dadurch, daß man die Sonde sehr klein bauen kann, so daß damit auch sehr kleine Nennabmessungen ohne Probleme geprüft werden können.

Durch eine kopierende Führung der Sonde am Rohr können Störeinflüsse durch Abstandsschwankungen minimiert werden.

Das vorgeschlagene Verfahren ist nicht nur für Rohre aus ferritischem Werkstoff, sondern ebenso auch für Rohre aus Edelstahl und für Flachprodukte anwendbar.

Weitere Vorteile und die Einzelheiten des Aufbaus des Meßgerätes sind der Zeichnung zu entnehmen. Es zeigen:
- Fig. 1: schematisch den Meßaufbau zur Erkennung der Schweißnaht von längsnahtgeschweißten Rohren,
- Fig. 2: das Detail einer Wicklung (Absolutschaltung),
- Fig. 3: das Detail einer alternativen Wicklung (Differenzschaltung) und
- Fig. 4: die Meßschaltung des Meßgerätes.

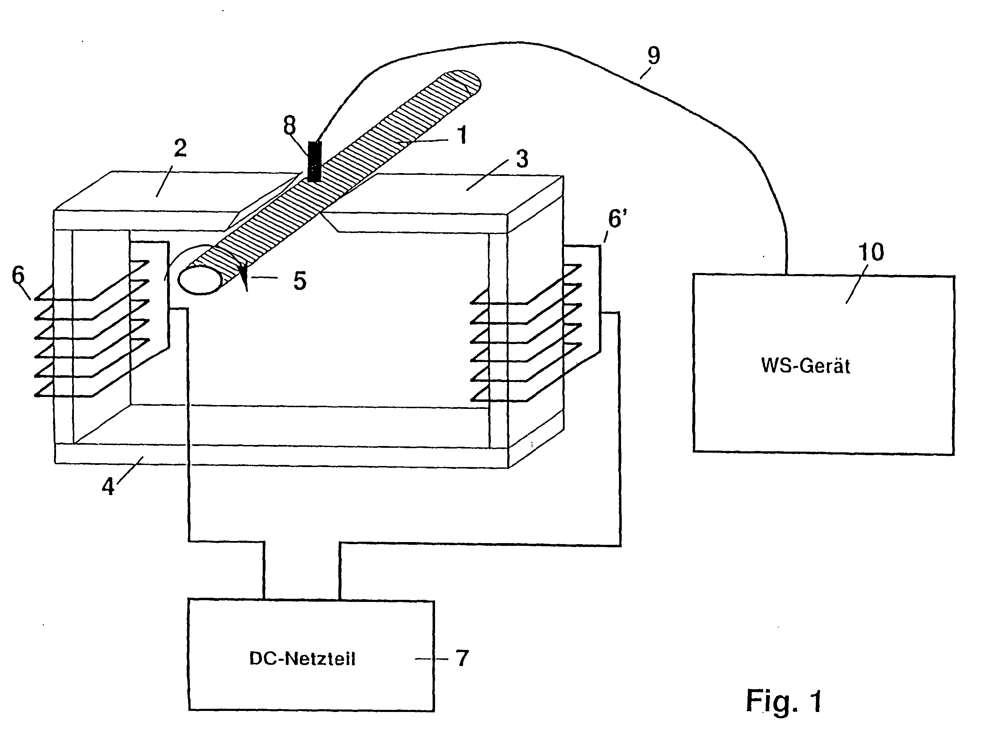

In Figur 1 ist schematisch der Meßaufbau zur Erkennung der Schweißnaht von längsnahtgeschweißten Rohren mittels Wirbelstrom dargestellt. Das zu prüfende längsnahtgeschweißte Rohr 1 wird zwischen die Enden 2, 3 eines Magnetjoches 4 gelegt und während der Messung gedreht, wie der Umlaufpfeil 5 zeigt. Am Magnetjoch 4 sind Wicklungen 6, 6' angeordnet, die mit einem Gleichstrom-Netzteil 7 verbunden sind. Auf das zu prüfende Rohr 1 wird eine Wirbelstromsonde 8 aufgesetzt, die über ein Kabel 9 mit einem Wirbelstromgerät 10 verbunden ist.

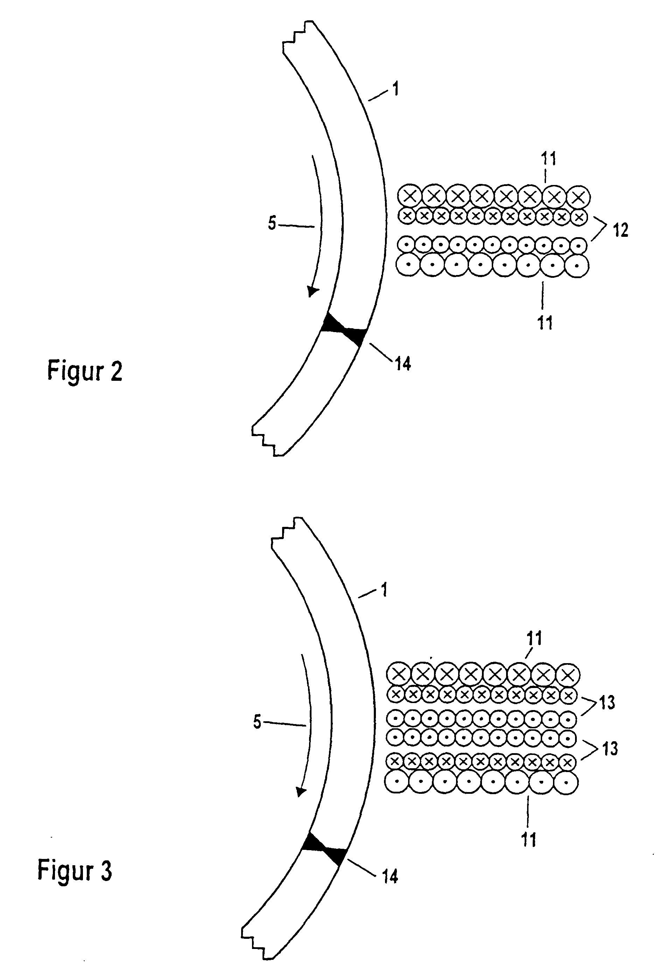

Figur 2 zeigt im Querschnitt ein Segment des zu prüfenden Rohres 1 mit der aufzufindenden Längsschweißnaht 14. Der Pfeil 5 zeigt an, daß das Rohr 1 während der Messung gedreht wird. Die Darstellung rechts neben dem Rohr 1 zeigt in einer Vergrößerung das Detail der Wicklung der verwendeten Sonde. Im Kernbereich der Sonde ist eine Empfangswicklung 12 in Absolutschaltung angeordnet, die von einer Feldwicklung 11 umgeben ist.

Figur 3 zeigt in einer gleichen Darstellung eine andere Art der Wicklung der Sonde. In dieser Ausführungsform ist im Kernbereich eine Empfangswicklung 13 in Differenzschaltung angeordnet, die von einer Feldwicklung 11 umgeben ist.

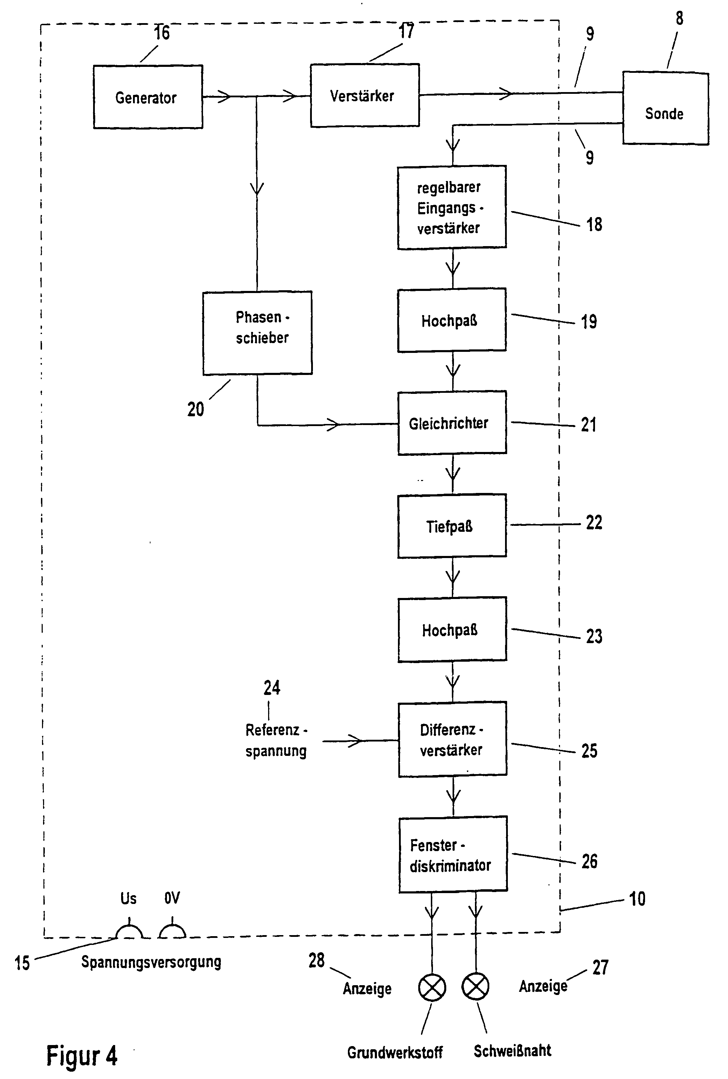

In Figur 4 ist schematisch zum einen die Verbindung zwischen Sonde 8 und Meßgerät 10 sowie die im Meßgerät 10 angeordnete Meßschaltung dargestellt. Die Spannungsversorgung 15 kann über einen Netztrafo oder über einen Akku erfolgen. Ein Generator 16 erzeugt die Meßfrequenz, die über einen Verstärker 17 der Feldwicklung 11 der Sonde 8 zugeführt wird. Das Meßsignal wird mit der Empfangswicklung 12, 13 detektiert und mit einem regelbaren Verstärker 18 vorverstärkt sowie über einen Hochpaß 19 gefiltert. Ein phasengesteuerter Gleichrichter aus den Komponenten 20, 21 sowie ein Tiefpaß 22 und Hochpaß 23 erzeugen die Ausgangsspannung, die mittels einer Referenzspannung 24, einem Differenzverstärker 25 und einem Fensterdiskriminator 26 eine Unterscheidung in Grundwerkstoff und Schweißnaht 26 erlaubt. Der Befund wird mit entsprechenden Anzeigen 27, 28 visualisiert.

## Patentansprüche

1. Verfahren zur Erkennung der Schweißnaht von einzelnen, aus einem ferritischen oder austenitischen Werkstoff hergestellten längsnahtgeschweißten Rohren (1), bei dem das einzelne Rohr (1) in ein Gleich-Magnetfeld gebracht und um seine Längsachse gedreht (5) wird und die zwischen Grundwerkstoff und Schweißnaht bestehenden Gefüge- und/oder Permeabilitätsunterschiede als Unterscheidungskriterium mittels einer in die Nähe des Rohres (1) gebrachten Sonde (8) festgestellt werden,
**dadurch gekennzeichnet,**
**dass** Wirbelstrom mit einer Frequenz im Bereich zwischen 100 kHz bis 1 MHz mittels der Sonde (8) in das Rohr (1) eingeschallt und zur Unterscheidung zwischen Grundwerkstoff und Schweißnaht die Ausgangsspannung zu einer Referenzspannung (24) differenziert wird und die Tangentialfeldstärke am Rohr (1) mindestens 500 Oerstedt beträgt.

2. Verfahren nach Anspruch 1,
**dadurch gekennzeichnet,**
**dass** die Frequenz 300 kHz beträgt.

3. Verfahren nach Anspruch 1 und 2,
**dadurch gekennzeichnet,**
**dass** die Tangentialfeldstärke 800 Oerstedt beträgt.

## Claims

1. A method for recognising the weld seam of individual longitudinally-welded tubes (1) made from a ferritic or austenitic material, in which the individual tube (1) is placed in a constant magnetic field and is rotated about its longitudinal axis (5) and the differences in microstructure and/or permeability existing between the base material and the weld seam are determined as a distinguishing criterion by means of a probe (8) placed in the vicinity of the tube (1),
**characterised in that**
eddy current of a frequency in the range between 100 kHz and 1 MHz is emitted into the tube (1) by means of the probe (8) and to distinguish between the base material and the weld seam the output voltage is differentiated from a reference voltage (24) and the tangential field strength on the tube (1) is at least 500 Oerstedt.

2. A method according to Claim 1, **characterised in that** the frequency is 300 kHz.

3. A method according to Claims 1 and 2, **characterised in that** the tangential field strength is 800 Oerstedt.

## Revendications

1. Procédé de détection du cordon de soudure de tubes (1) individuels à soudures longitudinales fabriqués dans une matière ferritique ou austénitique, dans lequel le tube individuel (1) est amené dans un champ magnétique continu et tourné autour de son axe longitudinal (5) et les différences de perméabilité et/ou de structure existant entre la matière de base et le cordon de soudure sont déterminées en tant que critères de différenciation au moyen d'une sonde (8) placée à proximité du tube (1),
**caractérisé en ce qu'**un courant de Foucault ayant une fréquence comprise entre 100 kHz et 1 MHz est introduit dans le tube (1) au moyen de la sonde (8), **en ce que** la tension de sortie est comparée à une tension de référence (24) afin de différencier la matière de base et le cordon de soudure et **en ce que** l'intensité du champ tangentiel sur le tube (1) est au moins égale à 500 oersteds.

2. Procédé selon la revendication 1,
**caractérisé en ce que** la fréquence est égale à 300 kHz.

3. Procédé selon les revendications 1 et 2,
**caractérisé en ce que** l'intensité du champ tangentiel est égale à 800 oersteds.
